# EUROPÄISCHE PATENTSCHRIFT

(11) **EP 4 460 645 B1**
(45) Veröffentlichungstag und Bekanntmachung des Hinweises auf die Patenterteilung: **24.09.2025**
(21) Anmeldenummer: 22700305.0
(22) Anmeldetag: 06.01.2022
(51) Int. Cl.: F16D 55/00, F16D 65/18

(54) **WÄLZLAGER FÜR EINE SCHEIBENBREMSE UND BREMSSATTEL MIT EINEM WÄLZLAGER**
ROLLING BEARING FPR A DISC BRAKE AND BRAKE CALLIPER WITH A ROLLING BEARING
COUSSINET À ROULIS POUR FREIN À DISQUE ET ÉTIRER DE FREIN AVEC UN COUSSINET À ROULIS

(43) Veröffentlichungstag der Anmeldung: 13.11.2024
(73) Patentinhaber: ZF CV Systems Europe BV, 1170 Brüssel (BE)
(72) Erfinder: MITTENDORF, Roman-Marius, 64646 Heppenheim (DE)
(74) Vertreter: Schäferjohann, Volker
(86) Internationale Anmeldenummer: PCT/EP2022/050178
(87) Internationale Veröffentlichungsnummer: WO 2023/131405

(56) Entgegenhaltungen:
- EP-A1- 2 312 173
- DE-A1- 102004 031 792
- DE-A1- 102012 103 017
- DE-A1- 102014 112 249
- DE-A1- 102015 225 259
- DE-B3- 102014 206 803
- JP-A- 2010 096 196

## Beschreibung

Die Erfindung bezieht sich auf ein Wälzlager für eine Scheibenbremse, insbesondere für eine Druckluft-Scheibenbremse, wobei die Scheibenbremse einen Bremszylinder, einen Schwenkhebel, der antriebsmäßig mit dem Bremszylinder gekoppelt ist, und ein sich über das Wälzlager am Schwenkhebel abstützendes Schubstück aufweist, mit einem Lagerschalen-Segment, und einem Lagerkäfig mit an dem Lagerschalen-Segment abwälzenden Wälzkörpern, wobei der Lagerkäfig in Umfangsrichtung des Lagerschalen-Segmentes beweglich und dazu eingerichtet ist, in einer Montageposition zum Lagerschalen-Segment lösbar fixiert zu werden. Die Erfindung bezieht sich des Weiteren auf einen Bremssattel für eine Scheibenbremse sowie ein Verfahren für den Zusammenbau eines Bremssattels.

Scheibenbremsen der vorbezeichneten Art sind in der Technik allgemein bekannt und werden üblicherweise in Fahrzeugen, wie beispielsweise Lastkraftwagen oder Bussen, für eine Bremswirkung an dem sich bewegenden Fahrzeug eingesetzt. Die Bremswirkung geht von einem Betätigungssignal aus, beispielsweise ausgehend von einem Bremspedal oder einem elektronischen Steuergerät des Fahrzeugs. Mit dem Betätigungssignal wird üblicherweise an einem Bremszylinder eine Betätigungskraft erzeugt, welche über einen Schwenkhebel auf ein an einem Bremssattel schiebebeweglich aufgenommenes Schubstück übertragen wird. Das bewegbare Schubstück wirkt mit einem Bremsbelag der Scheibenbremse zusammen, der sich mit Betätigung der Bremse in Richtung einer Bremsfläche einer bei der Bewegung des Fahrzeugs rotierenden Bremsscheibe bewegt und eine Reaktionskraft erzeugt, infolge welcher der Bremssattel verschoben wird bis schließlich ebenso der zweite Bremsbelag in Kontakt mit der rotierenden Bremsscheibe kommt. Durch die auf die Bremsfläche einwirkenden Flächen der Bremsbeläge wird eine Reibkraft zwischen Bremsscheibe und Bremsbelagflächen und damit die Bremswirkung am Fahrzeug erzielt.

Um die Bewegung des Schwenkhebels, der über mindestens ein Schwenklager beweglich am Bremssattel aufgenommen ist, ohne großen Kraftverlust auf das Schubstück übertragen zu können, ist zwischen den kraftübertragenden Flächen von Schwenkhebel und Schubstück ein Wälzlager vorgesehen. Um die vom Bremszylinder erzeugte Kraft sicher auf das Schubstück übertragen zu können, ist es entscheidend, dass das Wälzlager zwischen Schwenkhebel und Schubstück stets genau zu der Kraftübertragungsfläche am Schwenkhebel ausgerichtet bzw. positioniert ist.

Wäre das Wälzlager nicht in der korrekten Ausrichtung bzw. Position zwischen Schwenkhebel und Schubstück eingebaut, könnte dies zu einer verringerten Bremswirkung führen, was insbesondere durch eine unzureichende Ausrichtung bzw. Positionierung zwischen dem Lagerschalen-Segment und dem Lagerkäfig des Wälzlagers entstehen kann. Daher sind bereits beim Zusammenbau der Bremse die erforderlichen Vorkehrungen zu treffen, um zu verhindern, dass sich Teile des Wälzlagers versehentlich voneinander lösen, sodass die Bauteile nicht in der richtigen Position zueinander montiert werden.

Um insbesondere das Abgleiten der Wälzkörper zu dem insbesondere damit zusammenwirkenden Schwenkhebel während der Montage zu vermeiden, schlägt die DE 10 2013 211 447 B4 das Vorsehen von Haltemitteln am Lagerkäfig, mittels der der Lagerkäfig an der Lagerschale des Halbschalenlagers lösbar fixierbar ist. Die am Lagerkäfig abstehenden Haltemittel weisen Rastelemente auf, die mit vorbestimmten Bereichen der Lagerschale verrasten. Mit der ersten Betätigung der Bremse wird die Verrastung aufgehoben und das Wälzlager in seine Betriebsstellung überführt, wobei Teile der Haltemittel abbrechen können und somit frei beweglich innerhalb des Wälzlagers sind. Derartig bewegliche Rückstände sind unerwünscht, da auch diese gegebenenfalls zu einer Funktionsbeeinträchtigung an der Bremse führen können.

Die DE102012103017A offenbart ein Wälzlager für eine Scheibenbremse mit einer Wälzfläche und einem Wälzkörper, die sich an einer teilzylindrischen Druckfläche eines Drehhebels abstützt. Das Lagerschalenelement des Wälzlagers besitzt Seitenränder, die den Käfig halten.

Der Erfindung lag daher die Aufgabe zugrunde, ein Wälzlager für eine Scheibenbremse, einen Bremssattel sowie ein Verfahren für den Zusammenbau eines Bremssattels aufzuzeigen, mithilfe derer die obenstehende Problematik vermieden ist.

Gemäß einem ersten Aspekt löst die Erfindung die ihr zugrundeliegende Aufgabe bei einem Wälzlager für eine Scheibenbremse mit den Merkmalen nach Anspruch 1. Insbesondere ist vorgesehen, dass der Lagerkäfig eine Anschlagfläche mit mindestens einer Ausnehmung aufweist, und das Lagerschalen-Segment mindestens ein Anschlagteil aufweist, wobei die Ausnehmung und das Anschlagteil einander zugeordnet und dazu eingerichtet sind, unter Erzeugen einer Klemmwirkung in der Montageposition miteinander in Eingriff zu stehen.

Gemäß der vorliegenden Erfindung wird hier der Ansatz verfolgt, statt der am Lagerkäfig abstehenden Haltemittel, die mit der ersten Betätigung der Bremse beim Überführen des Lagerkäfigs von seiner Montageposition in seine Betriebsstellung am Lagerkäfig abbrechen könnten und sich dann im Lager bewegen würden, nunmehr eine Ausnehmung an einer Anschlagfläche des Lagerkäfigs vorzusehen, welche jeweils einem Anschlagteil am Lagerschalen-Segment zugeordnet ist, und die Ausnehmung und das Anschlagteil klemmend in Eingriff miteinander zu bringen. Dabei sind die Abmessungen von Ausnehmung und Anschlagteil so aufeinander abgestimmt, dass in der Montageposition des Lagerkäfigs, in der die Ausnehmung am Lagerkäfig und das Anschlagteil am Lagerschalen-Segment zusammenwirken, eine Klemmwirkung am Lagerschalen-Segment erzielt ist. Die Klemmwirkung des Lagerkäfigs am Lagerschalen-Segment des Wälzlagers beruht auf einer Kraftschlussverbindung zwischen den miteinander zusammenwirkenden Kontaktflächen von Ausnehmung und Anschlagteil. Um die Klemmwirkung zu erzeugen, wird der Lagerkäfig mit seiner Ausnehmung vorzugsweise mit einer vordefinierten Kraft mit dem Anschlagteil des Lagerschalen-Segments in Kontakt gebracht, insbesondere darauf aufgeschoben.

Vorliegend ist unter der Montageposition des Lagerkäfigs relativ zum Lagerschalen-Segment die Position zu verstehen, in der der Lagerkäfig insbesondere mit Bereichen seiner Ausnehmung unter Erzeugen der Klemmwirkung mit dem Anschlagteil am Lagerschalen-Segment in Eingriff steht. Mit der ersten Betätigung der Bremse löst sich der Lagerkäfig aus der Montageposition am Lagerschalen-Segment und geht in seine Betriebsstellung über. **In** der Betriebsstellung ist der Lagerkäfig mit seiner Anschlagfläche bzw. den daran ausgebildeten Ausnehmungen in einem Abstand zu den Anschlagenteilen des Lagerschalen-Segments angeordnet.

Gemäß einer bevorzugten Ausgestaltung weist die Ausnehmung mit dem Anschlagteil korrespondierende Klemmflächen zum Erzeugen der Klemmwirkung auf, die vorzugsweise ein Breitenmaß haben, welches im Wesentlichen parallel zur Längsachse der Wälzkörper gemessen wird, das kleiner ist als das Breitenmaß des mit der Ausnehmung zusammenwirkenden Anschlagteils am Lagerschalen-Segment. Vorliegend wird das Tiefenmaß der Ausnehmung durch das Abstandsmaß zwischen der Anschlagfläche und dem Grund der Ausnehmung definiert. Vorliegend ist die Klemmwirkung zwischen der Ausnehmung und dem Anschlagteil ist nur so groß gewählt, dass die Klemmwirkung zwischen Ausnehmung und Anschlagteil bei der ersten Betätigung der Bremse aufgehoben und der Lagerkäfig von seiner Montageposition in die Betriebsstellung überführt wird.

Gemäß einer bevorzugten Weiterbildung des Wälzlagers weist die Ausnehmung mindestens eine Klemmfläche zum Erzeugen der Klemmwirkung mit dem Anschlagteil auf, die in einem Winkel β von etwa 60° bis etwa 120° zur Anschlagfläche verläuft. Vorzugsweise verläuft die mindestens eine Klemmfläche der Ausnehmung in einem Winkel ungleich 90° zur Anschlagfläche. Die Klemmfläche bildet insbesondere eine das Breitenmaß der Ausnehmung definierende Wandfläche. Das Breitenmaß der Ausnehmung wird von der Anschlagfläche in Richtung des Grunds der Ausnehmung entweder kleiner oder größer. Vorzugsweise ist das kleinste Breitenmaß der Ausnehmung geringer als das Breitenmaß des mit der Ausnehmung korrespondierenden Anschlagteils. Wird der Lagerkäfig mit dem Lagerschalen-Segment in Eingriff gebracht, also in seine Montageposition bewegt, so entsteht durch die schräg verlaufende Klemmfläche entweder eine Klemmwirkung unmittelbar mit Inkontaktbringen des Lagerkäfigs am Anschlagteil, wobei sich die Ausnehmung zum Grund hin verbreitert, oder mit zunehmendem Aufschieben des Lagerkäfigs am Anschlagteil des Lagerschalen-Segments, wobei sich die Breite der Ausnehmung, zum Grund hin verringert.

Gemäß einer bevorzugten Ausgestaltung weist die Ausnehmung zwei in Richtung ihres Grunds keilförmig aufeinander zulaufende Klemmflächen auf. Mit der Ausgestaltung von zwei von der Anschlagfläche zum Grund der Ausnehmung schräg verlaufenden Klemmflächen an der Ausnehmung, welche deren Wandflächen ausbilden, ist ein verbesserter Ausgleich möglicher bei der Herstellung vom Lagerschalen-Segment und dem Lagerkäfig auftretender Toleranzen erreicht. Mit den beiden vorzugsweise keilförmig aufeinander zu laufenden Klemmflächen ist im Gegensatz zu nur einer schräg verlaufenden Klemmfläche ein doppelter Toleranzausgleich erreicht.

Gemäß einer bevorzugten Ausgestaltung des Wälzlagers ist die Ausnehmung eine erste Ausnehmung, und an der Anschlagfläche ist eine zweite Ausnehmung vorgesehen, wobei die zweite Ausnehmung vorzugsweise ein Spielmaß X zu einem zugehörigen zweiten Anschlagteil am Lagerschalen-Segment aufweist. Um den Lagerkäfig an einem zwei Anschlagteile aufweisenden Lagerschalen-Segment in seine Montageposition überführen zu können, ist am Lagerkäfig, insbesondere seiner Anschlagfläche, eine der Anzahl der Anschlagteile entsprechende Zahl an Ausnehmungen vorgesehen. Mindestens eine der Ausnehmungen ist gemäß der Erfindung zum Erzeugen einer Klemmwirkung in der Montageposition des Lagerkäfigs eingerichtet.

Die andere, insbesondere zweite Ausnehmung weist vorzugsweise zum zugehörigen zweiten Anschlagteil am Lagerschalen-Segment ein Breitenmaß B₁ auf, das größer ist als die Breite B₂ des Anschlagteils. Die Wandflächen der zweiten Ausnehmung verlaufen zum Erzeugen des Spielmaßes vorzugsweise im Abstand von wenigen Millimetern zur zugehörigen Wandfläche des zweiten Anschlagteils. Lagerkäfig und Lagerschalen-Segment stehen im Bereich der zweiten Ausnehmung nicht in Kontakt, weshalb etwaige Fertigungstoleranzen keinen Einfluss auf die Klemmwirkung zwischen dem Lagerkäfig und dem ersten Anschlagteil haben. Vorliegend erfolgt das Klemmen des Lagerkäfigs in seiner Montageposition somit nur über eine der daran ausgebildeten Ausnehmungen.

Gemäß einer Weiterbildung des Wälzlagers sind die zweite Ausnehmung und das der zweiten Ausnehmung zugeordnete Anschlagteils dazu eingerichtet, unter Erzeugen einer Klemmwirkung in der Montageposition miteinander in Eingriff zu stehen. Durch die erfindungsgemäße Ausgestaltung beider Ausnehmungen ist eine Klemmwirkung der ersten und der zweiten Ausnehmung am Lagerkäfig mit einem jeweils zugehörigen Anschlagteil erreicht. Die wirkende Klemmkraft zwischen dem Lagerschalen-Segment und dem Lagerkäfig in dessen Montageposition kann damit erhöht werden. Einem unbeabsichtigten Bewegen des Lagerkäfigs aus seiner Montageposition am Lagerschalen-Segment ist damit verbessert entgegengewirkt.

In ihrer allgemeinsten Ausführung weist die zweite Ausnehmung in Breitenrichtung eine Abmessung auf, die kleiner ist als das Breitenmaß des mit der zweiten Ausnehmung zusammenwirkenden Anschlagteils. In einer bevorzugten Ausgestaltung weist die zweite Ausnehmung in Anlehnung an die erste Ausnehmung mindestens eine im Winkel von etwa 60° bis etwa 120° zur Anschlagfläche verlaufende Klemmfläche auf, mithilfe der die Klemmwirkung am zweiten Anschlagteil bewirkt ist. In einer besonders bevorzugten Ausführung hat die zweite Ausnehmung zwei in Richtung ihres Grunds keilförmig aufeinander zulaufende Klemmflächen. Der Abstand der Klemmflächen im Nahbereich der Anschlagfläche ist größer als das Breitenmaß des Anschlagteils. Der Abstand der beiden keilförmig aufeinander zulaufenden Klemmflächen am Grund der Ausnehmung, welche deren Wandflächen definieren, ist vorzugsweise kleiner als die Breite des Anschlagteils. Vorzugsweise entspricht der Abstand zwischen den beiden keilförmig zulaufenden Klemmflächen etwa auf der Hälfte der Tiefe der Ausnehmung dem Breitenmaß des Anschlagteils.

Eine mögliche Weiterbildung der Erfindung sieht vor, dass in der ersten und/oder zweiten Ausnehmung zwei im vorbestimmten Abstand zueinander angeordnete sich vom Grund der Ausnehmung in Richtung der Anschlagfläche erstreckende Klemmkeile mit verjüngender Kontur ausgebildet sind. Durch das Vorsehen von sich vom Grund der Ausnehmung in Richtung der Anschlagfläche erstreckenden Klemmkeilen ist die Nachgiebigkeit der die Klemmwirkung mit dem jeweils zugehörigen Anschlagteil des Lagerschalen-Segmentes umsetzenden Keilflächen an den Klemmkeilen erhöht. Die sich vom Grund aus in Richtung der Anschlagfläche erstreckenden Klemmkeile weisen eine Höhe auf, die etwa der Tiefe der Ausnehmung von der Anschlagfläche bis zum Grund entspricht. Zwischen einem in der Ausnehmung ausgebildeten Klemmkeil und einer dazu benachbart angeordneten Wandfläche der Ausnehmung ist eine keilförmige Aussparung vorgesehen, welche sich von der Anschlagfläche am Lagerkäfig in Richtung des Grunds der Ausnehmung verkleinert. Durch die ausgebildete Aussparung zwischen dem Klemmkeil und der im Wesentlichen senkrecht zwischen Grund und Anschlagfläche verlaufenden Wandfläche der Ausnehmung kann der Klemmkeil beim Inkontaktbringen des Lagerkäfigs mit zumindest einem der Anschlagteile am Lagerschalen-Segment gezielt nach außen, also in Richtung der Wandflächen der Ausnehmung, ausweichen.

Vorzugsweise weisen die Klemmkeile einen Winkel zwischen ihren keilförmig zueinander verlaufenden Keilflächen im Bereich von 10° bis 60° auf. Mit dem Anpassen des Keilwinkels bei der Herstellung des Lagerkäfigs kann die Nachgiebigkeit der Klemmkeile definiert werden, wodurch gezielt Einfluss auf die Klemmwirkung zwischen den einander zugewandten Keilflächen der Klemmkeile und dem oder den damit in Kontakt bringbaren Anschlagteil(en) am Lagerschalen-Segment genommen werden.

Gemäß einer bevorzugten Weiterbildung ist der Lagerkäfig zumindest im Bereich seiner an der Anschlagfläche ausgebildeten Ausnehmungen partiell oder vollständig aus einem Verbundwerkstoff ausgebildet. Vorzugsweise wird ein Verbundwerkstoff mit einer Kunststoffmatrix verwendet. Zudem hat ein Verbundwerkstoff mit einer Kunststoffmatrix eine vergleichsweise hohe Steifigkeit im Vergleich zu seinem Gewicht und lässt sich günstig herstellen. Vorzugsweise wird zur Ausgestaltung zumindest des Bereiches des Lagerkäfigs mit seinen Ausnehmungen ein faserverstärkter Kunststoff verwendet, wobei der Kunststoff insbesondere ein thermoplastischer Kunststoff ist, besonders bevorzugt ein Polyamid, und wobei vorzugsweise die Fasern Glasfasern und/oder Kohlenstofffasern sind. Es haben sich beispielsweise PA 6.6 mit einem Glasfaseranteil von 20 Gew.-% oder mehr, vorzugsweise 25 Gew.-% oder mehr, besonders 30 Gew.% oder mehr als vorteilhafte Werkstoffe erwiesen.

Die Erfindung betrifft in einem weiteren Aspekt einen Bremssattel für eine Scheibenbremse, insbesondere für eine Druckluft-Scheibenbremse, mit einem am Bremssattel beweglich aufgenommenen und durch einen Bremszylinder verstellbaren Schwenkhebel, und einem Schubstück, das mittels des Schwenkhebels im Wesentlichen radial zur Schwenkachse des Schwenkhebels bewegbar ist.

Die Erfindung löst die eingangs bezeichnete Aufgabe, indem der Bremssattel ein Wälzlager aufweist, mittels dem das Schubstück sich am Schwenkhebel abstützt, wobei das Wälzlager nach einer der vorstehend beschriebenen bevorzugten Ausführungsformen ausgebildet ist. Die Erfindung macht sich hierbei die Erkenntnis zunutze, dass mittels der zumindest einen am Lagerkäfig, insbesondere der Anschlagfläche des Lagerkäfigs, ausgebildeten Ausnehmung und dem der Ausnehmung zugeordneten Anschlagteil am Lagerschalen-Segment, eine Klemmwirkung zwischen den in der Montageposition miteinander in Eingriff stehenden Kontaktflächen von Ausnehmung und Anschlagteil erzielt ist. Die Ausnehmung weist Klemmflächen auf, die mit dem Anschlagteil korrespondieren. Vorzugsweise ist die Ausnehmung hinsichtlich ihrer Abmessungen, insbesondere in Breitenrichtung, derart angepasst, dass diese mit Bewegen des Lagerkäfigs in seine Montageposition am Lagerschalen-Segment klemmend gehalten wird.

Vorzugsweise ist die Klemmwirkung zwischen den die Ausnehmung in Breitenrichtung begrenzenden Klemmflächen und den das Anschlagteil seitlich begrenzenden vorzugsweise zu den Klemmflächen in der Ausnehmung im Wesentlichen parallel verlaufenden Bauteilflächen erzeugt. Insbesondere ist das Breitenmaß zwischen den Klemmflächen der Ausnehmung zumindest entlang eines Abschnitts der Klemmfläche, ausgehend von der Anschlagfläche am Lagerkäfig in Richtung des Grunds der Ausnehmung, kleiner als das Breitenmaß der Anschlagteile am Lagerschalen-Segment. Beim Inkontaktbringen des Lagerkäfigs mit dem Anschlagteil, also beim Bewegen des Lagerkäfigs in seine Montageposition, kommt es zur Klemmwirkung, wenn die jeweils einander zugewandten Flächen von Ausnehmung und Anschlagteil miteinander in Kontakt gelangen.

In einer weiteren Ausgestaltung des Bremssattels weist die Ausnehmung von der Anschlagfläche in Richtung des Grunds der Ausnehmung keilförmig aufeinander zulaufende Klemmflächen auf. In einer weiteren Ausgestaltung sind am Lagerkäfig zwei Ausnehmungen ausgebildet, von denen eine erste Ausnehmung so ausgebildet ist, dass eine Klemmwirkung mit einem zugehörigen Anschlagteil am Lagerschalen-Segment erzeugt ist, wohingegen die Abmessungen der zweiten Ausnehmung so groß sind, dass das der zweiten Ausnehmung zugeordnete Anschlagteil mit Spiel in der Ausnehmung aufgenommen ist.

Gemäß einem weiteren Aspekt betrifft die Erfindung ein Verfahren für den Zusammenbau eines Bremssattels, insbesondere eines Bremssattels nach einer der vorbeschriebenen bevorzugten Ausführungsformen, wobei das Verfahren die Schritte umfasst: Vormontieren eines Schubstückes und mindestens eines Wälzlagers nach einer der vorstehend beschriebenen bevorzugten Ausführungsformen zur Bildung einer Vorbaugruppe, Bewegen des Lagerkäfigs des Wälzlagers in Umfangsrichtung am Lagerschalen-Segment während des Vormontierens, und Inkontaktbringen des Lagerkäfigs mit einem Anschlagteil des Lagerschalen-Segmentes, so dass der Lagerkäfig am Lagerschalen-Segment in seiner Montageposition klemmend gehalten wird, sowie Einbauen der Vorbaugruppe in den Bremssattel.

Mithilfe der erfindungsgemäßen Verfahrensschritte ist bewirkt, dass durch das Klemmen des Lagerkäfigs relativ zum Lagerschalen-Segment des Wälzlagers eine Arretierung des Lagerkäfigs in seiner Montageposition bewirkt ist, in der der Lagerkäfig während des Zusammenbaus des Bremssattels und dessen Transport sicher gehalten wird. Erst mit der ersten Betätigung der Bremse wird die Klemmwirkung zwischen dem Lagerkäfig und dem Anschlagteil am Lagerschalen-Segment aufgehoben und der Lagerkäfig in seine Betriebsstellung überführt. Durch das Verhindern des Abgleitens des Wälzlagers relativ zum Lagerschalen-Segment des Wälzlagers vor dem Zusammenbau ist einer verringerten Bremswirkung entgegengewirkt.

Die zu dem erfindungsgemäßen Wälzlager beschriebenen Vorteile und bevorzugten Ausführungsformen sind zugleich auch Vorteile und bevorzugte Ausführungsformen des Bremssattels gemäß dem zweiten Aspekt der Erfindung sowie des Verfahrens für den Zusammenbau eines Bremssattels gemäß dem weiteren Aspekt der vorliegenden Erfindung und umgekehrt.

Die in der Beschreibung, in den Zeichnungen sowie in den Ansprüchen offenbarten Merkmale der Erfindung können sowohl einzeln als auch in beliebiger Kombination miteinander für die Weiterbildung der Erfindung wesentlich sein, sofern sie sich aus technischer Sicht nicht widersprechen.

Die Erfindung wird im Folgenden anhand verschiedener Ausführungsbeispiele unter Bezugnahme auf die beigefügten Figuren näher beschrieben. Hierbei zeigen:
- Fig. 1: eine perspektivische Ansicht eines Bremssattels;
- Fig. 2: eine Ansicht eines schwenkbar am Bremssattel aufgenommenen Schwenkhebels und eines sich über ein Wälzlager daran abstützenden Schubstückes;
- Fig. 3: eine perspektivische Ansicht eines Schubstückes und eines Wälzlagers gemäß Fig. 2;
- Fig. 4a: eine Ansicht einer ersten Ausführungsform eines Lagerkäfigs;
- Fig. 4b: eine perspektivische Teilansicht eines Wälzlagers mit dem Lagerkäfig aus Fig. 4a in Montageposition am Lagerschalen-Segment;
- Fig. 5a: eine Ansicht eines weiteren Ausführungsbeispiels eines Lagerkäfigs;
- Fig. 5b: eine perspektivische Teilansicht eines Wälzlagers mit dem Lagerkäfig aus Fig. 5a in Montageposition am Lagerschalen-Segment;
- Fig. 6a: eine Ansicht eines weiteren Ausführungsbeispiels eines Lagerkäfigs;
- Fig. 6b: eine perspektivische Teilansicht eines Wälzlagers mit dem Lagerkäfig aus Fig. 6a in Montageposition am Lagerschalen-Segment;
- Fig. 7a: eine Ansicht eines weiteren Ausführungsbeispiels eines Lagerkäfigs, und
- Fig. 7b: eine perspektivische Teilansicht eines Wälzlagers mit dem Lagerkäfig aus Fig. 7a in Montageposition am Lagerschalen-Segment.

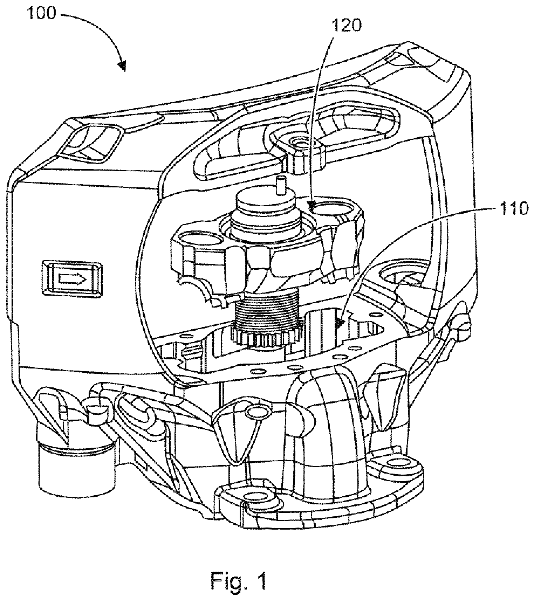

Fig. 1 zeigt einen Bremssattel 100 einer nicht näher im Detail gezeigten Scheibenbremse eines Fahrzeugs, welche üblicherweise ein Paar von ebenfalls nicht gezeigten Bremsbelägen umfasst, die voneinander beabstandet sind. Zwischen den Bremsbelägen ist eine weiter nicht gezeigte Bremsscheibe angeordnet. Durch das aufeinander Zubewegen der Bremsbeläge ist eine Bremswirkung an der im Betrieb eines Fahrzeugs sich drehenden Bremsscheibe bewirkt.

Der Bremssattel 100 umfasst eine Aufnahme 110 und ferner ein in die Aufnahme 110 einsetzbares Schubstück 120, welches für die Montage innerhalb des Bremssattels konfiguriert ist und mittels dem nach vollständiger Bremsenmontage eine Druckkraft auf eine Rückseite eines der Bremsbeläge für das aufeinander Zubewegen der Bremsbeläge aufgebracht wird.

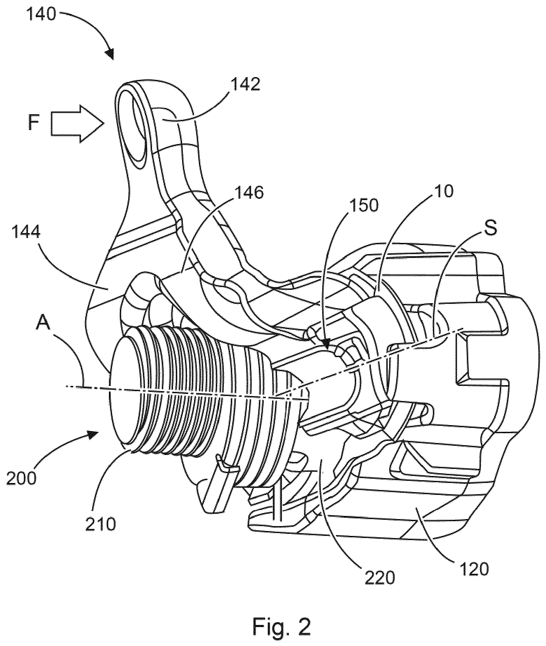

In Fig. 2 ist ein Schwenkhebel 140 gezeigt, der im nicht näher dargestellten Bremssattel 100 beweglich aufgenommen und antriebsmäßig mit einem nicht näher dargestellten Bremszylinder gekoppelt ist. Der Schwenkhebel 140 ist innerhalb des Bremssattels 100 um ein Schwenklager 150 mit einer Schwenkachse S herum beweglich gelagert.

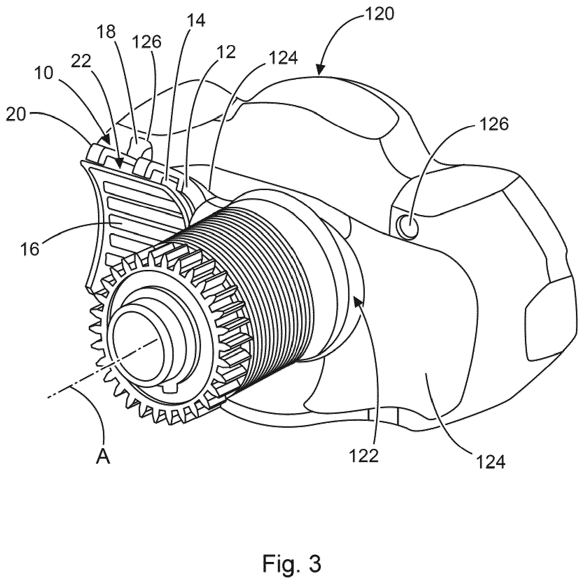

Wie in Fig. 2 weiter gezeigt, weist der Schwenkhebel 140 einen Schwenkarm 142 auf, an dem der Bremszylinder, der in die abgebildete Kraftrichtung F wirkt, antriebsmäßig angreift. Der Schwenkhebel 140 weist zudem zwei voneinander beabstandete Schaftabschnitte 144, 146, die sich von dem Schwenkarm 142 in Richtung des Schubstückes 120 erstrecken. Der Bremssattel 100 umfasst ferner eine Nachstelleinheit 200, die zum Einstellen des Lüftspiels des Bremsbelages konfiguriert ist. Wie aus Fig. 3 ersichtlich, weist das Schubstück 120 eine Bohrung 122 auf, in die die Nachstelleinheit 200 mit einer mit einem entsprechenden Gewinde versehenen Einstellspindel 210 eingreift.

Das Schubstück 120 stützt sich auf der vom Schwenklager 150 abgewandten Seite der Schaftabschnitte 144, 146 über ein Wälzlager 10 gegenüber dem Schwenkhebel 140 ab. Wird der Schwenkhebel 140 durch den nicht dargestellten Bremszylinder in Richtung der in Fig. 2 gezeigten Kraftrichtung F bewegt, wird die damit einhergehende Schwenkbewegung der Schaftabschnitte 144, 146 in eine Verstellbewegung im Wesentlichen parallel zur Verstellachse A der Nachstelleinheit 200 bewegt.

Im Betrieb kann zur Einstellung der Bremsbelagposition der Schwenkhebel 140 auch mit der Nachstelleinheit 200 zusammenwirken, wobei die Bewegung des Schwenkhebels 140 mit einer Betätigungsringanordnung 220 zusammenwirkt und eine Drehung der Einstellspindel 210 um die Verstellachse A bewirkt. Jeder der zwei Schaftabschnitte 144, 146 wirkt mit einem Wälzlager 10 zusammen, gegen das sich das Schubstück 120 mit jeweils einer konkav gekrümmten Stützflächen 124 abstützt. Die Stützflächen 124 sind teilweise zylindrisch in Bezug auf die Schwenkachse S des Schwenklagers ausgebildet. Die Wälzlager 10 sind über Befestigungs-Schnittstellen 126 am Schubstück 120 angeordnet. Jedes Wälzlager 10 weist ein Lagerschalen-Segment 12 und einen Lagerkäfig 14 mit an den Lagerschalen-Segmenten abwälzenden Wälzkörpern 16 auf. Am Lagerschalen-Segment 12 ist ein Haken 18 ausgebildet, der jeweils in eine Befestigungs-Schnittstelle 126 am Schubstück 120 eingreift. Der Haken 18 und das Lagerschalen-Segment 12 sind einteilig ausgebildet.

Ferner weist das Lagerschalen-Segment 12 mindestens ein Anschlagteil 20 auf, das die Montageposition für den Lagerkäfig 14 definiert und mittels dem die Bewegung des Lagerkäfigs 14 in Umfangsrichtung des Lagerschalen-Segmentes 12 begrenzt wird. Der Lagerkäfig 14 weist eine Anschlagfläche 22 auf, die mit dem mindestens einen Anschlagteil 20 in Montageposition des Lagerkäfig 14 in Kontakt steht und den Lagerkäfig relativ zum Lagerschalen-Segment 12 positioniert. Gemäß der Erfindung soll verhindert werden, dass sich der Lagerkäfig 14 während des Transports oder während des Zusammenbaus des Bremssattels, beispielsweise während des Einsetzens des Schubstückes 120 in die dafür am Bremssattel 100 vorgesehene Aufnahme 110, ungewollt aus der Montageposition bewegt.

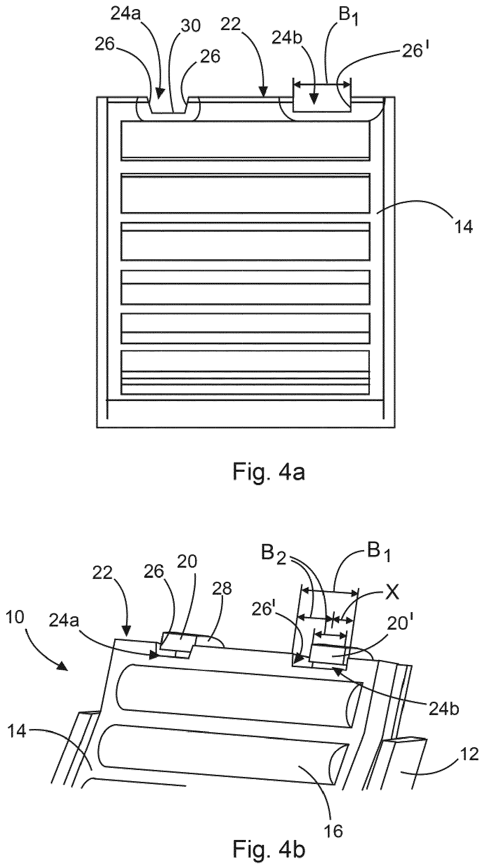

Zu diesem Zweck weist der Lagerkäfig 14 gemäß einer möglichen in den Fig. 4a und 4b gezeigten Ausgestaltung eine erste Ausnehmung 24a an der Anschlagfläche 22 auf, die mit dem Anschlagteil 20 am Lagerschalen-Segment zusammenwirkt, wobei die Abmessungen des Anschlagteils 20 und der Ausnehmung 24a zum Erzeugen einer Klemmwirkung in der Montageposition aufeinander abgestimmt sind. **In** der vorliegenden Ausführungsform weist die Ausnehmung 24a mindestens eine im Winkel von etwa 60° bis etwa 120° zur Anschlagfläche 22 verlaufende Klemmfläche 26 zum Erzeugen der Klemmwirkung mit den Kontaktflächen 28 am Anschlagteil 20 auf. Die Ausnehmung 24a weist in der gezeigten Ausführung insbesondere zwei in Richtung ihres Grunds keilförmig aufeinander zulaufende Klemmflächen 26 auf.

Wie aus Fig. 4b ersichtlich, ist somit zwischen der Ausnehmung 24a und dem Anschlagteil 20 eine Klemmwirkung in der in Fig. 4b gezeigten Montageposition des Lagerkäfigs 14 zum Lagerschalen-Segment 12 erzeugt.

Neben der ersten Ausnehmung 24a weist der Lagerkäfig 14 eine zweite Ausnehmung 24b mit einem Breitenmaß B₁ auf, das, entgegen der Ausnehmung 24a, größer ist als die Breite B₂ des der Ausnehmung 24b zugeordneten Anschlagteils 20'. Die Ausnehmung 24b hat zwei Wandflächen 26' die im Abstand zum zweiten Anschlagteil 20' angeordnet sind. Die Ausnehmung 24b weist ein Spielmaß X gegenüber dem zugehörigen, zweiten Anschlagteil 20' am Lagerschalen-Segment 12 auf. Die Klemmwirkung in der Montageposition des Lagerkäfigs 14 erfolgt somit ausschließlich über die Ausnehmung 24a und das Anschlagteil 20.

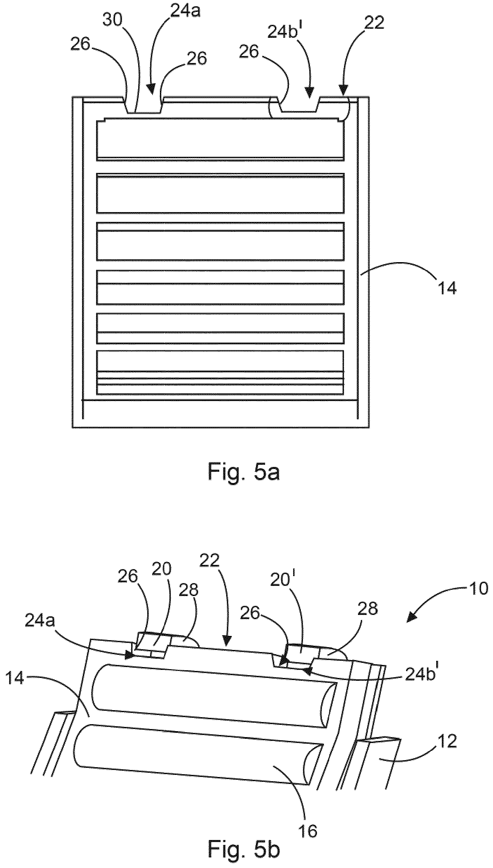

Die Fig. 5a und 5b zeigen eine weitere Ausgestaltung des Wälzlagers 10 mit seinem Lagerschalen-Segment 12 und seinem Lagerkäfig 14 und den vom Lagerkäfig eingehausten Wälzkörpern 16. In der vorliegend gezeigten Ausführungsform weist der Lagerkäfig 14 eine erste Ausnehmung 24a und eine zweite Ausnehmung 24b' auf. Beide Ausnehmungen 24a, 24b' sind dazu eingerichtet, eine Klemmwirkung mit dem jeweils zugehörigen ersten und zweiten Anschlagteil 20, 20' zu erzeugen. Beide Ausnehmungen 24a, 24b' weisen Abmessungen auf, die an die Abmessungen der Anschlagteile 20, 20' derart angepasst sind, dass eine Klemmwirkung erzeugt ist, wenn der Lagerkäfig 14 in seine in Fig.5b gezeigte Montageposition am Lagerschalen-Segment 12 bewegt wird. Beide Ausnehmungen 24a, 24b' haben jeweils zwei in Richtung ihres Grunds keilförmig aufeinander zulaufende Klemmflächen 26, die entlang eines Abschnitts mit den Kontaktflächen 28 an den Anschlagteilen 20, 20' in Anlage sind.

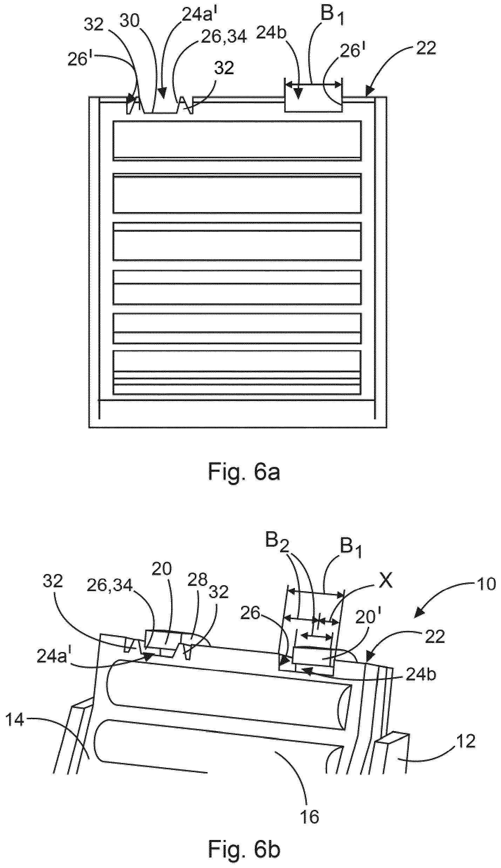

In den Fig. 6a und 6b ist eine weitere Ausgestaltung eines Wälzlagers 10 gezeigt, das einen Lagerkäfig 14 mit einer ersten Ausnehmung 24a' an seiner Anschlagfläche 22 aufweist. In der ersten Ausnehmung 24a' sind zwei im vorbestimmten Abstand zueinander angeordnete und sich vom Grund 30 der Ausnehmung 24a' in Richtung der Anschlagfläche 22 erstreckende Klemmkeile 32 mit verjüngender Kontur ausgebildet.

Die Klemmkeile 32 weisen Keilflächen 34 auf, die ähnlich wie die Klemmflächen 26 der Ausnehmung 24a ausgehend von der Anschlagfläche 22 in Richtung des Grunds 30 der Ausnehmung 24a' keilförmig aufeinander zulaufen. Die Klemmkeile 32 sind jeweils beabstandet zu den benachbart angeordneten Wandflächen 26' der Ausnehmung 24a' angeordnet.

Beim Klemmen des Lagerkäfigs 14 in seiner Montageposition an dem zugehörigen Anschlagteil 20 des Lagerschalen-Segmentes 12, gezeigt in Fig. 6b, können die Klemmkeile 32 leichter nach außen in Richtung der Wandflächen 26 ausweichen. Die Ausnehmung 24a' ist die erste Ausnehmung am Lagerkäfig 14 und in der gezeigten Ausführungsform weist der Lagerkäfig 14 eine zweite Ausnehmung 24b auf, deren Breitenmaß B₁ größer ist als die Breite B₂ des zugeordneten Anschlagteils 20'. Damit ist ein Spielmaß X zwischen der zweiten Ausnehmung 24b dem Anschlagteil 20' vorhanden. Das Klemmen erfolgt nur über die Ausnehmung 24" am Lagerkäfig 14 an dem damit zusammenwirkenden Anschlagteil 20 am Lagerschalen-Segment 12.

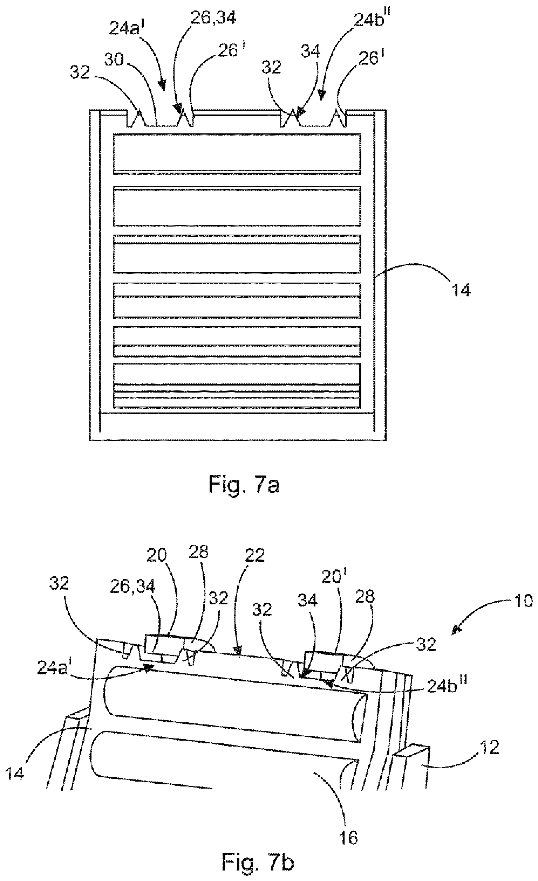

Eine weitere in den Fig. 7a und 7b gezeigte Ausgestaltung des Wälzlagers 10 sieht vor, dass am Lagerkäfig 14, insbesondere dessen Anschlagfläche 22, eine erste Ausnehmungen 24a' und eine zweite Ausnehmung 24b" ausgebildet sind, die jeweils sich vom Grund 30 der Ausnehmungen 24a', 24b" in Richtung der Anschlagfläche 22 erstreckende Klemmkeile 32 mit verjüngender Kontur aufweisen. Das Klemmen des Lagerkäfigs 14 in seiner Montageposition (Fig. 7b) erfolgt mittels der in beiden Ausnehmungen 24a', 24b" angeordneten Klemmkeile 32 mit ihren Keilflächen 34 und den damit zusammenwirkenden Anschlagteilen 20, 20' am Lagerschalen-Segment 12.

### Bezugszeichenliste (Teil der Beschreibung)

- 10: Wälzlager
- 12: Lagerschalen-Segment
- 14: Lagerkäfig
- 16: Wälzkörper
- 18: Haken
- 20, 20': Anschlagteil
- 22: Anschlagfläche
- 24a, 24a': erste Ausnehmung
- 24b, 24b', 24b": zweite Ausnehmung
- 26: Klemmfläche
- 26': Wandfläche
- 28: Kontaktfläche
- 30: Grund
- 32: Klemmkeil
- 34: Keilfläche
- 100: Bremssattel
- 110: Aufnahme
- 120: Schubstück
- 122: Bohrung
- 124: Stützfläche
- 126: Befestigungs-Schnittstelle
- 140: Schwenkhebel
- 142: Schwenkarm
- 144, 146: Schaftabschnitt
- 150: Schwenklager
- 200: Nachstelleinheit
- 210: Einstellspindel
- 220: Betätigungsringanordnung
- A: Verstellachse
- B₁: Breitenmaß
- B₂: Breite
- F: Kraftrichtung
- S: Schwenkachse
- X: Spielmaß

## Patentansprüche

1. Wälzlager (10) für eine Scheibenbremse, insbesondere für eine Druckluft-Scheibenbremse, wobei die Scheibenbremse einen Bremszylinder, einen Schwenkhebel (140), der antriebsmäßig mit dem Bremszylinder gekoppelt ist, und ein sich über das Wälzlager (10) am Schwenkhebel (140) abstützendes Schubstück (120) aufweist, wobei das Wälzlager (10)
- ein Lagerschalen-Segment (12), und
- einen Lagerkäfig (14) mit an dem Lagerschalen-Segment (12) abwälzenden Wälzkörpern (16) aufweist, wobei der Lagerkäfig (14) in Umfangsrichtung des Lagerschalen-Segmentes (12) beweglich und dazu eingerichtet ist, in einer Montageposition zum Lagerschalen-Segment (12) lösbar fixiert zu werden, **dadurch gekennzeichnet, dass** der Lagerkäfig (14) eine Anschlagfläche (22) mit mindestens einer Ausnehmung (24a, 24a', 24b, 24b', 24b") aufweist, und das Lagerschalen-Segment (12) mindestens ein Anschlagteil (20, 20') aufweist, wobei die Ausnehmung (24a, 24a', 24b, 24b', 24b") und das Anschlagteil (20, 20') einander zugeordnet und dazu eingerichtet sind, unter Erzeugen einer Klemmwirkung in der Montageposition miteinander in Eingriff zu stehen.

2. Wälzlager (10) nach Anspruch 1,
**dadurch gekennzeichnet, dass** die Ausnehmung (24a, 24a', 24b', 24b") mit dem Anschlagteil (20, 20') korrespondierende Klemmflächen (26) zum Erzeugen der Klemmwirkung aufweist.

3. Wälzlager (10) nach Anspruch 1 oder 2,
**dadurch gekennzeichnet, dass** die Ausnehmung (24a, 24a', 24b', 24b") mindestens eine in einem Winkel (β) von etwa 60° bis etwa 120° zur Anschlagfläche (22) verlaufende Klemmfläche (26) zum Erzeugen der Klemmwirkung mit dem Anschlagteil (20, 20') aufweist.

4. Wälzlager (10) nach Anspruch 1 bis 3,
**dadurch gekennzeichnet, dass** die Ausnehmung (24a, 24a', 24b', 24b") zwei in Richtung ihres Grunds (30) keilförmig aufeinander zulaufende Klemmflächen (26) aufweist.

5. Wälzlager (10) nach Anspruch 1 bis 4,
**dadurch gekennzeichnet, dass** die Ausnehmung (24a, 24a') eine erste Ausnehmung ist, und an der Anschlagfläche (22) eine zweite Ausnehmung (24b, 24b', 24b") vorgesehen ist, wobei die zweite Ausnehmung (24b) vorzugsweise ein Spielmaß (X) zu einem zugehörigen zweiten Anschlagteil (20') am Lagerschalen-Segment (12) aufweist.

6. Wälzlager (10) nach Anspruch 5,
**dadurch gekennzeichnet, dass** die zweite Ausnehmung (24b', 24b") und das der zweiten Ausnehmung zugeordnete Anschlagteils (20') dazu eingerichtet sind, unter Erzeugen einer Klemmwirkung in der Montageposition miteinander in Eingriff zu stehen.

7. Wälzlager (10) nach einem der vorstehenden Ansprüche 5 oder 6,
**dadurch gekennzeichnet, dass** in der ersten Ausnehmung (24a') und/oder zweiten Ausnehmung (24b") zwei im vorbestimmten Abstand zueinander angeordnete, sich vom Grund (30) der ersten Ausnehmung (24a') und/oder zweiten Ausnehmung (24b") in Richtung der Anschlagfläche (22) erstreckende Klemmkeile (32) mit verjüngender Kontur als Klemmflächen (26) ausgebildet sind.

8. Wälzlager (10) nach einem der vorstehenden Ansprüche,
**dadurch gekennzeichnet, dass** der Lagerkäfig (14) zumindest im Bereich seiner an der Anschlagfläche (22) ausgebildeten ersten und/oder zweiten Ausnehmungen (24a, 24a', 24b, 24b', 24b") partiell oder vollständig aus einem Verbundwerkstoff ausgebildet ist.

9. Bremssattel (100) für eine Scheibenbremse, insbesondere für eine Druckluft-Scheibenbremse, mit
- einem am Bremssattel (100) beweglich aufgenommenen und durch einen Bremszylinder verstellbaren Schwenkhebel (140),
- einem Schubstück (120), das mittels des Schwenkhebels (140) im Wesentlichen radial zur Schwenkachse (S) des Schwenkhebels (140) bewegbar ist, und
- einem Wälzlager (10), mittels dem das Schubstück (120) sich am Schwenkhebel (140) abstützt, wobei das Wälzlager (10) nach einem der Ansprüche 1 bis 7 ausgebildet ist.

10. Verfahren für den Zusammenbau eines Bremssattels (100), insbesondere eines Bremssattels nach Anspruch 9, wobei das Verfahren die Schritte umfasst:
- Vormontieren eines Schubstückes (120) und mindestens eines Wälzlagers (10) nach einem der Ansprüche 1 bis 7 zur Bildung einer Vorbaugruppe,
- Bewegen des Lagerkäfigs (14) des Wälzlagers (10) in Umfangsrichtung am Lagerschalen-Segment (12) während des Vormontierens, und
- Inkontaktbringen des Lagerkäfigs (14) mit einem Anschlagteil (20, 20') des Lagerschalen-Segmentes (12), so dass der Lagerkäfig (14) am Lagerschalen-Segment (12) in seiner Montageposition klemmend gehalten wird, sowie
- Einbauen der Vorbaugruppe in den Bremssattel (100).

## Claims

1. Roller bearing (10) for a disk brake, in particular for a pneumatic disk brake, the disk brake comprising a brake cylinder, a pivoting lever (140) which is drivingly coupled to the brake cylinder, and a thrust piece (120) supported on the pivoting lever (140) via the roller bearing (10), the roller bearing (10) comprising
- a bearing shell segment (12), and
- a bearing cage (14) having rolling elements (16) rolling on the bearing shell segment (12), the bearing cage (14) being movable in the peripheral direction of the bearing shell segment (12) and being configured to be releasably fixed relative to the bearing shell segment (12) when in an assembly position,
**characterized in that** the bearing cage (14) comprises a stop surface (22) having at least one recess (24a, 24a', 24b, 24b', 24b"), and the bearing shell segment (12) comprises at least one stop part (20, 20'), the recess (24a, 24a', 24b, 24b', 24b") and the stop part (20, 20') being associated with one another and being configured to engage with one another in the assembly position to produce a clamping effect.

2. Roller bearing (10) according to claim 1,
**characterized in that** the recess (24a, 24a', 24b', 24b") comprises clamping surfaces (26) corresponding to the stop part (20, 20') in order to produce the clamping effect.

3. Roller bearing (10) according to either claim 1 or claim 2,
**characterized in that** the recess (24a, 24a', 24b', 24b") comprises at least one clamping surface (26) for producing the clamping effect with the stop part (20, 20'), which clamping surface extends at an angle (β) of approximately 60° to approximately 120° to the stop surface (22).

4. Rolling bearing (10) according to claims 1 to 3,
**characterized in that** the recess (24a, 24a', 24b', 24b") comprises two clamping surfaces (26) which converge toward one another in a wedge shape in the direction of the base (30) of the recess.

5. Rolling bearing (10) according to claims 1 to 4,
**characterized in that** the recess (24a, 24a') is a first recess, and a second recess (24b, 24b', 24b") is provided on the stop surface (22), the second recess (24b) preferably having a clearance (X) with respect to an associated second stop part (20') on the bearing shell segment (12).

6. Rolling bearing (10) according to claim 5,
**characterized in that** the second recess (24b', 24b") and the stop part (20') associated with the second recess are configured to engage with one another in the assembly position to produce a clamping effect.

7. Rolling bearing (10) according to either of the preceding claims 5 or 6,
**characterized in that** two clamping wedges (32) are formed as clamping surfaces (26) in the first recess (24a') and/or second recess (24b"), which wedges are arranged at a predetermined distance from one another, have a tapered contour and extend from the base (30) of the first recess (24a') and/or second recess (24b") in the direction of the stop surface (22).

8. Rolling bearing (10) according to any of the preceding claims,
**characterized in that** the bearing cage (14) is partly or completely made of a composite material at least in the region of its first and/or second recesses (24a, 24a', 24b, 24b', 24b") formed on the stop surface (22).

9. Brake caliper (100) for a disk brake, in particular for a pneumatic disk brake, comprising
- a pivoting lever (140) movably mounted on the brake caliper (100) and adjustable via a brake cylinder,
- a thrust piece (120) which, by means of the pivoting lever, is movable (140) substantially radially relative to the pivot axis (S) of the pivoting lever (140), and
- a rolling bearing (10) by means of which the thrust piece (120) is supported on the pivoting lever (140), wherein the rolling bearing (10) is designed according to any of claims 1 to 7.

10. Method for assembling a brake caliper (100), in particular a brake caliper according to claim 9, wherein the method comprises the steps of:
- pre-assembling a thrust piece (120) and at least one rolling bearing (10) according to any of claims 1 to 7 in order to form a subassembly,
- moving the bearing cage (14) of the rolling bearing (10) in the peripheral direction on the bearing shell segment (12) during pre-assembly, and
- bringing the bearing cage (14) into contact with a stop part (20, 20') of the bearing shell segment (12) so that the bearing cage (14) is held clamped in its assembly position on the bearing shell segment (12), and
- installing the subassembly into the brake caliper (100).

## Revendications

1. Palier à roulement (10) pour un frein à disque, en particulier pour un frein à disque à air comprimé, dans lequel le frein à disque présente un cylindre de frein, un levier pivotant (140) qui est accouplé en entraînement au cylindre de frein, et une pièce de poussée (120) s'appuyant sur le levier pivotant (140) par l'intermédiaire du palier à roulement (10), dans lequel le palier à roulement (10) présente
- un segment formant coussinet de palier (12), et
- une cage de palier (14) comportant des corps de roulement (16) roulant sur le segment formant coussinet de palier (12), dans lequel la cage de palier (14) est mobile dans la direction circonférentielle du segment formant coussinet de palier (12) et est conçue pour être fixée de manière amovible dans une position de montage par rapport au segment formant coussinet de palier (12),
**caractérisé en ce que** la cage de palier (14) présente une surface de butée (22) comportant au moins un évidement (24a, 24a', 24b, 24b', 24b"), et le segment formant coussinet de palier (12) présente au moins une pièce de butée (20, 20'), dans lequel l'évidement (24a, 24a', 24b, 24b', 24b") et la pièce de butée (20, 20') sont associés l'un à l'autre et conçus pour venir en prise l'un avec l'autre en générant une action de serrage dans la position de montage.

2. Palier à roulement (10) selon la revendication 1,
**caractérisé en ce que** l'évidement (24a, 24a', 24b', 24b") présente des surfaces de serrage (26) correspondant à la pièce de butée (20, 20') pour la génération de l'effet de serrage.

3. Palier à roulement (10) selon la revendication 1 ou 2,
**caractérisé en ce que** l'évidement (24a, 24a', 24b', 24b") présente au moins une surface de serrage (26) s'étendant à un angle (β) allant d'environ 60° à environ 120° par rapport à la surface de butée (22) pour la génération de l'effet de serrage avec la pièce de butée (20, 20').

4. Palier à roulement (10) selon les revendications 1 à 3,
**caractérisé en ce que** l'évidement (24a, 24a', 24b', 24b") présente deux surfaces de serrage (26) se rapprochant l'une de l'autre de manière cunéiforme en direction de son fond (30).

5. Palier à roulement (10) selon les revendications 1 à 4,
**caractérisé en ce que** l'évidement (24a, 24a') est un premier évidement, et un second évidement (24b, 24b', 24b") est prévu sur la surface de butée (22), dans lequel le second évidement (24b) présente de préférence un jeu (X) par rapport à une seconde pièce de butée (20') correspondante sur le segment formant coussinet de palier (12).

6. Palier à roulement (10) selon la revendication 5,
**caractérisé en ce que** le second évidement (24b', 24b") et la pièce de butée (20') associé au second évidement sont conçus pour venir en prise l'un avec l'autre en générant une action de serrage dans la position de montage.

7. Palier à roulement (10) selon l'une des revendications précédentes 5 ou 6,
**caractérisé en ce que,** dans le premier évidement (24a') et/ou le second évidement (24b"), deux coins de serrage (32) disposés à une distance prédéterminée l'un de l'autre et s'étendant du fond (30) du premier évidement (24a') et/ou du second évidement (24b") en direction de la surface de butée (22) sont réalisés sous forme de surfaces de serrage (26) comportant un contour se rétrécissant.

8. Palier à roulement (10) selon l'une des revendications précédentes,
**caractérisé en ce que** la cage de palier (14) est réalisée partiellement ou entièrement en un matériau composite au moins dans la zone de ses premiers et/ou seconds évidements (24a, 24a', 24b, 24b', 24b") réalisés sur la surface de butée (22).

9. Étrier de frein (100) pour un frein à disque, en particulier pour un frein à disque à air comprimé, comportant
- un levier pivotant (140) logé de manière mobile sur l'étrier de frein (100) et réglable par un cylindre de frein,
- une pièce de poussée (120) qui est mobile au moyen du levier pivotant (140) sensiblement radialement par rapport à l'axe de pivotement (S) du levier pivotant (140), et
- un palier à roulement (10) au moyen duquel la pièce de poussée (120) s'appuie sur le levier pivotant (140), dans lequel le palier à roulement (10) est réalisé selon l'une des revendications 1 à 7.

10. Procédé pour l'assemblage d'un étrier de frein (100), en particulier d'un étrier de frein selon la revendication 9, dans lequel le procédé comprend les étapes consistant à :
- prémonter une pièce de poussée (120) et au moins un palier à roulement (10) selon l'une des revendications 1 à 7 pour la formation d'un pré-ensemble,
- déplacer la cage de palier (14) du palier à roulement (10) dans la direction circonférentielle sur le segment formant coussinet de palier (12) pendant le prémontage, et
- mettre en contact la cage de palier (14) avec une pièce de butée (20, 20') du segment formant coussinet de palier (12), de sorte que la cage de palier (14) est maintenue par serrage sur le segment formant coussinet de palier (12) dans sa position de montage, ainsi que
- installer le pré-ensemble dans l'étrier de frein (100).
